Europäisches Patentamt

European Patent Office

Office européen des brevets

(11) Publication number: **0 250 063**
**A2**

## EUROPEAN PATENT APPLICATION

(21) Application number: **87302069.7**

(22) Date of filing: **11.03.87**

(51) Int. Cl.4: **F16C 1/14** , F16C 11/06

(30) Priority: **16.06.86 US 874473**

(43) Date of publication of application:
**23.12.87 Bulletin 87/52**

(84) Designated Contracting States:
**DE FR GB IT**

(71) Applicant: **TELEFLEX INCORPORATED**
**155 S. Limerick Road**
**Limerick Pennsylvania 19468(US)**

(72) Inventor: **Spease, Arthur L**
**15456 Fairlane Street**
**Livonia Michigan 48154(US)**
Inventor: **Niskanen, Don L.**
**13998 Sunset Street**
**Livonia Michigan 48154(US)**

(74) Representative: **Walters, Frederick James et al**
**Urquhart-Dykes & Lord 91 Wimpole Street**
**London W1M 8AH(GB)**

(54) **Swivel terminal member.**

(57) A motion transmitting remote control assembly
(10) for transmitting motion in a curved path includes
a tube member (14) and a rod (18) moveably sup-
ported by the tube member (14) and extending
therefrom to provide a variable extending length of
the rod member (18) between the tube member (14)
and one end (20) thereof to define a line of force. An
integral terminal member (22) operatively intercon-
nects extending length of the rod member (18) and a
control member (24). The terminal member (22) has
a cavity (36) therein defining an axis which is perpendicular relative to the line of force. The assembly
(10) is characterized by a terminal member (22)
including a resilient integral vibration dampening
member (38) totally encapsulated in the cavity (36)
and including a spherical retaining pocket (40) for
retaining the ball pin (32) of a control member (24).
A method for manufacturing the assembly includes
the steps of placing the resilient pocket member
(38) about a spherical mandrel (60), molding the
terminal member (22) about the pocket member
(38) to retain the shape of the pocket (40), and
removing the mandrel (60) from the mold terminal
member (22).

Fig. 3

## SWIVEL TERMINAL MEMBER

### TECHNICAL FIELD

This invention relates to a motion transmitting remote control assembly for transmitting motion in a curved path. More specifically, this invention relates to a molded terminal fitting including a vibration dampening pocket.

### BACKGROUND ART

Push-pull motion transmitting remote control assemblies are well suited as actuators. These assemblies generally include a flexible core element supported for longitudinal movement within a conduit. A terminal member is mounted on the end portion of the core element to interconnect the core element with the control member. Noise isolation between the terminal member and the control member is often required to prevent the transduction of vibrations and the resulting noise. Presently, assemblies are known which are suitable for dampening vibrations about a rod which fully extend through the terminal member. The United States Patent No. 4,327,600 to Bennett discloses a push-pull assembly including a terminal member having a resilient member disposed in the passageway thereof for cushioning the control member for preventing the transmission of vibration between the control member and the core element.

The instant invention provides a terminal member including vibration dampening means adapted for supporting and retaining a ball pin within the vibration dampening member rather than a rod extending through the dampening member. The most pertinent prior art to the instant invention is the pending United States Patent Application Serial No. 697,025 filed January 31, 1985. This application discloses a molded terminal member including a resilient vibration dampening member for supporting and retaining a ball pin. This assembly, however, has too deficiencies. The first deficiency is the vibration dampening member does not fully isolate the ball pin of the control member. Secondly, a large force is required to move the ball pin into or out of the assembly.

### SUMMARY OF THE INVENTION AND ADVANTAGES

According to the present invention, a motion transmitting remote control assembly for transmitting motion in a curved path is provided. The assembly comprises guide means, core means which is movably supported by the guide means and extends from the guide means to provide a variable expending length of the core means between the guide means and one end therefore to define a line of force, and an integral terminal member for operatively interconnecting the extended length of the core means and a control member through a ball pin and having a cavity defining an axis being perpendicular relative to the line of force. The terminal member includes a resilient vibration dampening member totally encapsulated in the cavity and a retaining pocket for retaining the ball pin of the control member therein. The retaining pocket is spherical for isolation completely about the ball pin. The terminal member further includes a circular mouth opening into the pocket. The mouth has a diameter less than the diameter of the spherical pocket for allowing a ball pin having the same diameter as the spherical pocket to pass through the mouth in response to a force applied to the ball pin in a direction parallel to the axis.

A preferred method of manufacturing the molded terminal with a flexible vibration dampener pocket is also provided. The method comprises the steps of placing the resilient pocket member having a pocket and an opening at one end thereof about a spherical mandrel, molding the terminal member about the pocket member to retain the shape of the pocket, and removing the mandrel from the molded terminal member.

Accordingly, the present invention offers a terminal with a vibration dampener pocket which provides isolation completely about the ball pin. The present invention also allows the ball pin to pass into and out of the pocket with little force required to be applied to the ball pin.

### FIGURES IN THE DRAWING

Other advantages of the present invention will be readily appreciated as the same becomes better understood by reference to the following detailed description when considered in connection with the accompanying drawings wherein:

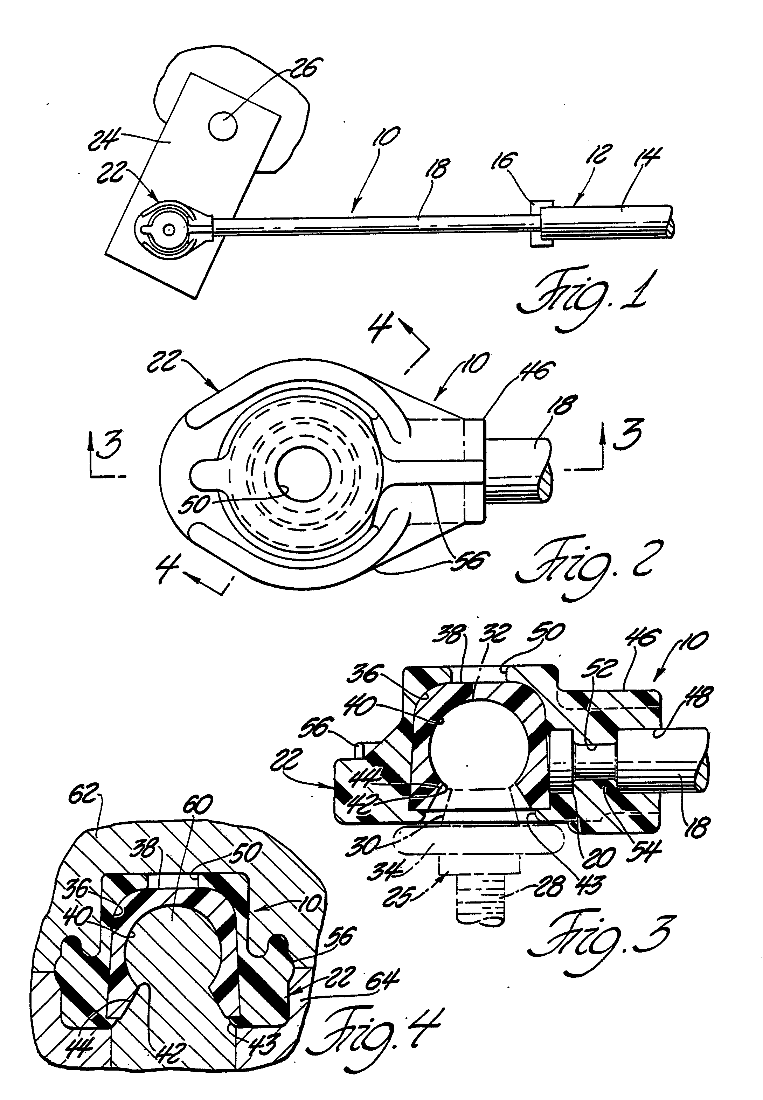

FIGURE 1 is a schematic elevational view of a motion transmitting remote control assembly constructed in accordance with the instant invention;

FIGURE 2 is an enlarged fragmentary plan view of a terminal member of the instant invention;

FIGURE 3 is a cross-sectional view taken substantially along lines 3-3 of Figure 2; and

FIGURE 4 is a cross-sectional view taken substantially along lines 4-4 of Figure 2.

## DETAILED DESCRIPTION OF THE DRAWINGS

Referring to the drawings, a motion transmitting remote control assembly for transmitting motion in a curved path is generally shown at 10.

The assembly 10 includes guide means generally indicated at 12, the guide means 12 including a flexible conduit (not shown) connected to a tube member 14. A wiper member 16 is mounted on the end portion of the tube member 14. The assembly 10 further includes core means comprising a flexible core element supported within the conduit and having a rod member 18 fixedly secured to the end of the flexible core element and disposed within the tube member 14 and extending from the tube member 14 to provide a variable extending length of the rod member 18 between the tube member 14 and one end 20 of the rod member 18. The rod member 18 defines a line of force as the rod member moves into and out of the tube member 14. The wiper member 16 engages the rod member 18 to prevent foreign particulate matter from entering the tube member 14.

The assembly 10 further includes an integral terminal member generally indicated at 22 for operatively interconnecting the extending length of the rod member 18 and a control member 24. The control member 24 may take the form of a lever 24 supported upon a rotatable actuating shaft 26. The terminal member 22 is pivotally mounted upon a projection, generally indicated at 25, and shown in phantom in Figure 3. The projection 25 may be an integral projection extending from the lever 24 or the projection 25 may include a threaded portion 28 to be threadably connected in a threaded bore in the lever 24. The projection 25 includes a body portion 30 and a ball pin 32 extending therefrom. The body portion 30 has a diameter less than the diameter of the opening 42 to allow the ball pin 32 to swivel inside the terminal member 22. A flange 34 extends outwardly from the body portion 30.

The terminal member 22 has a cavity 36 defining an axis which is perpendicular relative to the line of force defined by the rod member 18. The terminal member 22 is characterized by including a resilient integral vibration dampening member 38 which is totally encapsulated in the cavity 36. The vibration dampening member 38 includes a retaining pocket 40 for retaining the ball pin 32 of the control member 24 inside the retaining pocket 40. The retaining pocket 40 is spherical for isolation completely about the ball pin 32.

The terminal member 22 further includes a circular mouth opening 42 that has a diameter which is less than the diameter of the spherical pocket 40 for allowing a ball pin 32 having the same diameter as the spherical pocket 40 to pass through the mouth 42 in response to a force applied to the ball pin 32 in a direction parallel to the axis defined by the cavity 36. The mouth 42 is defined by a frustoconical wall 44 extending away from the mouth 42 to define a flexible lip for allowing the ball pin 32 to pass therethrough.

The terminal means includes a neck portion 46 having a bore 48 extending radially relative to the cavity 36 and parallel to the line of force defined by the rod member 18. The neck portion 46 has an end portion 20 of the rod member 18 disposed within the bore 48. The end portion 20 of the rod member 18 includes an annular recessed portion 52. The neck portion 46 of the terminal member 22 includes an annular projection 54 extending into the bore 48 so as to engage the annular recess 52 thereby retaining the end portion 20 of the rod member 18 within the bore 48. The bore 48 extends through the neck portion 46 and the end portion 20 of the rod member 18 is disposed within the bore 48 so that the end portion 20 abuts the vibration dampening member 38 within the bore 48.

The terminal means 22 includes a recess 50 on the opposite side from the mouth 42. The terminal means 22 also includes a plurality of reinforcing ridges 56 to strengthen the terminal member. The terminal member is made of an organic polymeric material.

To manufacture a molded terminal with a flexible vibration dampener pocket the resilient pocket member 38 having a pocket 40 and an opening 42 at one end thereof is placed about a spherical mandrel 60 thus forming a spherical pocket 40 in the pocket member 38. The opening is preformed in the pocket member 38 with a circular mouth 42 having a diameter less than the diameter of the spherical pocket 40. A frustoconical wall 44 is also preformed in the pocket member 38. The frustoconical wall 44 extends outwardly from the mouth 42 to define a flexible lip at the intersection of the wall 44 and the spherical pocket 40.

The terminal member 22 is then molded about the spherical pocket member 38. An opening 43 is formed on one side of the terminal member 22 which is axially aligned with the opening in the pocket member 38 while molding the terminal member 22 about the pocket member 38. The terminal member 22 is simultaneously molded about one end 20 of a rod member 18 abutting the vibration dampener pocket. After the molding has been completed, the mandrel 60 is removed form the molded terminal member 22.

The form used to mold the terminal member 22 comprises a three part mold. The first part is the mandrel 60. The second and third parts 62 and 64 comprise the housing inside of which the terminal member is molded.

The invention has been described in an illustrative manner and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in anyway limiting, the invention may be practiced otherwise than as specifically described.

## Claims

1. A method of manufacturing a molded terminal with a flexible vibration dampener pocket, said method comprising steps of; placing a resilient pocket member (38) having a pocket (40) and an opening (42) at one end thereof about a spherical mandrel (60), molding the terminal member (22) about the pocket member (38) to retain the shape of the pocket (40), and removing the mandrel from the molded terminal member (22).

2. A method as set forth in claim 1 further characterized by forming an opening (43) on one side of the terminal member (22) axially aligned with the opening (42) in the pocket member (38) while molding the terminal member about the pocket member (38)

3. A method as set forth in claim 2 further characterized by forming the pocket (40) in spherical shape in the pocket member (38) and preforming the opening therein with a circular mouth (42) with a diameter less than the diameter of the spherical pocket (40).

4. A method as set forth in claim 3 further characterized by preforming a frustoconical wall (44) in the pocket member (38) extending outwardly from the mouth (42) to define a flexible lip at the intersection of the wall (44) and the spherical pocket (40).

5. A method as set forth in claim 4 further characterized by simultaneously molding the terminal member (22) about one end of a rod member (18) and the pocket member (38) with the rod member (18) abutting the vibration dampener pocket (38).

6. A motion transmitting remote control assembly (10) for transmitting motion in a curved path, said assembly (10) comprising; guide means (12); core means movably supported by said guide means (12) and extending therefrom to provide variable extending length of said core means between said guide means (12) and one end therefor to define a line of force; and an integral terminal member (22) for operatively interconnecting said extending length of said core means and a control member (24) through a ball pin (32) and having a cavity (36) defining an axis being perpendicular relative to said line of force, said terminal member (22) characterized by including a resilient vibration dampening member (38) totally encapsulated in said cavity (36) and including a retaining pocket (40) for retaining the ball pin (32) of the control member (24) therein, said retaining pocket (40) being spherical for isolation completely about the ball pin (32), a circular mouth (42) opening into said pocket (40), said mouth (42) having a diameter less than the diameter of said spherical pocket (40) for allowing a ball pin (32) having the same diameter as said spherical pocket (40) to pass through said mouth (42) in response to a force applied to the ball pin (32) in a direction parallel to said axis.

7. An assembly as set forth in claim 6 further characterized by said mouth (42) being defined by a frustoconical wall extending away from said mouth (42) to define a flexible lip for allowing the ball pin (32) to pass therethrough.

8. An assembly as set forth in claim 7 further characterized by said terminal member (22) including a plurality of reinforcing ridges (56) to strengthen said terminal member (22).

9. An assembly as set forth in claim 8 further characterized by said terminal member (22) including a recess (50) on the opposite side of said terminal member (22) from said mouth (42).

10. An assembly as set forth in claim 9 further characterized by said terminal member (22) including a neck portion (46) having a bore (48) extending radially relative to said cavity (36) and parallel to said line of force, said neck portion (46) having an end portion (20) of said core means disposed within said bore (48).

11. An assembly as set forth in claim 10 further characterized by said bore (48) extending through said neck portion (46) to said vibration dampening member (38) said core means including a rod member (18) defining said extending portion and including said end portion (20) thereof, said end portion (20) of said rod member (18) abutting said vibration dampening member (38) within said bore (48).

12. An assembly as set forth in claim 11 further characterized by said terminal member (22) being made of an organic polymeric material.

0 250 063

Fig. 1

Fig. 2

Fig. 3

Fig. 4